# EUROPEAN PATENT SPECIFICATION

(11) **EP 2 888 806 B1**
(45) Date of publication and mention of the grant of the patent: **10.10.2018**
(21) Application number: 13832974.3
(22) Date of filing: 27.08.2013
(51) Int. Cl.: H02K 21/12, H02K 9/02, H02K 1/27

(54) **ROTOR WITH MAGNET PATTERN**
ROTOR MIT MAGNETMUSTER
ROTOR AVEC MOTIF D'AIMANT

(30) Priority: 27.08.2012 US 201261693375 P; 06.03.2013 US 201361773295 P
(43) Date of publication of application: 01.07.2015
(73) Proprietor: Albus Technologies Ltd., 7745275 Ashdod (IL)
(72) Inventor: SROMIN, Alexander, 7747628 Ashdod (IL)
(74) Representative: Vogel, Andreas
(86) International application number: PCT/IL2013/050728
(87) International publication number: WO 2014/033715

(56) References cited:
- WO-A1-2011/032201
- FR-A1- 2 766 027
- US-A- 4 318 019
- US-A- 5 117 553
- US-A1- 2008 278 022
- US-A1- 2011 266 811
- US-B2- 6 794 783

## Description

### RELATED APPLICATIONS

This application claims the priority and benefit under 35 USC 119€ of US Provisional Patent Applications 61/773,295 filed 6 March 2013 and 61/693,375 filed 27 August 2012.

### FIELD AND BACKGROUND OF THE INVENTION

The present invention, in some embodiments thereof, relates to a rotor for an electric machine such as an electric motor or generator, and, more particularly, but not exclusively, to patterns for magnetic elements of a planar rotor for an axial air-gap electric machine.

As an aid to understanding the present invention, several examples of known designs for planar rotors of axial air-gap machines are presented, for purposes of comparison, in the accompanying figures, and are discussed herein. As will be seen in that discussion, some of these designs presented may be relatively inefficient in the use of space available for a planar rotor, as compared to some embodiments of the present invention disclosed herein. Additionally, some of these known designs may be more expensive or more difficult to build, as compared to some embodiments of the present invention disclosed herein.

International patent application WO 2011/032201 A1 by Soderberg Rod F describe "a magnetic field interactive material being part of a machine component or mechanism utilizing magnetic or electro-magnetic field forces in said components operation and comprising specifically located magnetic particles incorporated into a non homogeneous amalgamation within the matrix or structural matrix of primarily a metal material differing from that of the magnetic particles therein forming an integrated component possessing magnetic field interactive capabilities, allowing such magnetic field interactive components to have a wide array of uses one of which is associated with Hybrid and Electric Vehicles" (abstract).

Note is taken of the following documents describing inventions in this field:
U.S. Patent No. 5,783,885 to Richard F. Post, for "Self Adjusting Magnetic Bearing Systems".
U.S. Patent No. 7.084,548 to Christopher W. Gabrys, for "Low Cost High Speed Electrical Machine".
U.S. Patent Application Publication No. US2005/0236918 by Hugo H. van den Bergh et al., for "Rotary Disk Energy Storage and Pulse Power Supply".
U.S. Patent Application Publication No. US2010/0253173 by Koji Miyata et al., for "Axial Gap Type Coreless Rotating Machine".
U.S. Patent Application Publication No. US2011/0024567 by Mark Blackwelder et al., for "Electrical Power Generation Apparatus for Contra-Rotating Open-Rotor Aircraft Propulsion System".

### SUMMARY OF THE INVENTION

Some embodiments of the invention pertain to an electrical machine such as an electric motor or generator whose rotor is a planar unit. Designs presented below may provide improved optimization in the use of magnet material incorporated into the rotors, as compared to previously known designs. The designs may also be advantageous in that they may be more simple than some prior art designs, since some embodiments require only two types of magnetic pieces whereas some comparably efficient prior art designs require manufacture and assembly of a larger number of types of magnetic pieces, which may make those known designs more difficult and expensive to manufacture.

According to an aspect of some embodiments of the present invention there is provided a rotor for an axial air-gap electric machine comprising alternating north and south magnetic poles, each of the poles being generated by a pair of permanent magnets.

According to some embodiments of the invention, for each of the pairs of permanent magnets, axial components of the magnetization of the magnets are co-directional, and tangential components of the magnetization of the paired magnets are opposite each other.

According to some embodiments of the invention, the rotor comprises first and second sets of magnet pairs, magnet pairs of the first set having tangential magnetization components directed towards each other, magnets of the second set having tangential magnetization components directed away from each other, and wherein pairs of the first set alternate with pairs of the second set around the rotor.

According to some embodiments of the invention, the pairs of magnets are magnetized with an orientation of about 45° to the rotational axis of the rotor.

According to some embodiments of the invention, the pairs of magnets are magnetized with an orientation of between 30° and 60° to the rotational axis of the rotor.

According to an aspect of some embodiments of the present invention there is provided a rotor for an axial air-gap electric machine having a rotational axis, the rotor comprising alternating north and south magnetic poles, each of the north and south poles being generated by a pair of permanent magnets, wherein axial components of the magnetization of the paired magnets are co-directional, and tangential components of the magnetization of the paired magnets are opposite.

According to some embodiments of the invention, the rotor comprises first and second sets of magnet pairs, magnet pairs of the first set having tangential magnetization components directed towards each other, magnet pairs of the second set having tangential magnetization components directed away from each other, and wherein pairs of the first set alternate with pairs of the second set around the rotor.

According to some embodiments of the invention, the pairs of magnets are magnetized with an orientation of about 45° to the rotational axis of the rotor.

According to some embodiments of the invention, the pairs of magnets are magnetized with an orientation of between 30° and 60° to the rotational axis of the rotor.

According to some embodiments of the invention, the pairs of magnets are magnetized with an orientation of between 15° and 75° to the rotational axis of the rotor.

According to some embodiments of the invention, additional magnet elements having a tangential magnetization component are interposed between the south and north poles.

According to some embodiments of the invention, the additional magnet elements are so oriented that their tangential magnetization component points away from a magnet pair generating a south pole and towards a magnet pair generating a north pole.

According to some embodiments of the invention, the additional magnetic elements interposed between the south and north poles alternate between a first set of additional magnetic elements having a tangential magnetic orientation in a first direction, one of clockwise and counterclockwise, and a second set of additional magnetic elements having a tangential magnetic orientation in a second direction opposite the first direction.

According to some embodiments of the invention, each of the additional magnetic elements is so oriented that the tangential magnetic orientation of each of the additional magnetic elements is away from a south pole and towards a north pole.

According to some embodiments of the invention, the rotor is shaped as a disk.

According to some embodiments of the invention, at least some of the pairs of magnets are butt-jointed.

According to some embodiments of the invention, at least some of the pairs of magnets are spaced away from adjacent pairs of magnets.

According to some embodiments of the invention, the rotor comprises a space between each of the pairs of magnets.

According to some embodiments of the invention, the magnet pairs comprise permanent magnets butt-jointed to each other.

According to some embodiments of the invention, at least some of the magnet pairs comprise permanent magnets which are spaced apart so that they do not touch each other.

According to some embodiments of the invention, all of the pairs of magnets are butt-jointed and all of the permanent magnet elements are of a same size and shape.

According to some embodiments of the invention, at least some of the pairs of magnets are butt-jointed and comprise permanent magnet elements of a same size and shape.

According to some embodiments of the invention, the rotor further comprises a soft magnetic yoke.

According to some embodiments of the invention, the yoke comprises ribs which separate each pair of magnets from adjacent pairs of magnets.

According to some embodiments of the invention, the yoke comprises ribs which separate each permanent magnet from adjacent permanent magnets.

According to some embodiments of the invention, the yoke comprise radial slot-like openings.

According to some embodiments of the invention, at least some of the magnets have a face which is supported by the yoke and which is also least partially exposed to air through one of the openings.

According to some embodiments of the invention, the rotor comprises a first layer, wherein alternating north and south magnetic poles are each generated by a pair of permanent magnets wherein axial components of the magnetization of said paired magnets are co-directional, and tangential components of the magnetization of said paired magnets are opposite, and the rotor further comprises a second layer adjacent to the first layer, the second layer comprising axially magnetized permanent magnets.

According to some embodiments of the invention, each of the axially magnetized permanent magnets of the second layer has a magnetic orientation opposite that of the axially magnetized permanent magnets which are adjacent to it on the second layer.

According to some embodiments of the invention, magnets of each of the pairs of magnets are but-jointed to each other and to one of the axially magnetized magnet pieces.

According to an aspect of some embodiments of the present invention there is provided an axial air-gap electric machine comprising a rotor having a rotational axis, the rotor comprising alternating north and south magnetic poles, each of the north and south poles being generated by a pair of permanent magnets, wherein axial components of the magnetization of the paired magnets are co-directional, and tangential components of the magnetization of the paired magnets are opposite.

According to some embodiments of the invention, the machine comprises a rotor assembly which comprises two spaced-apart rotors, each comprising alternating north and south magnetic poles, each of said north and south poles being generated by a pair of permanent magnets, wherein axial components of the magnetization of said paired magnets are co-directional, and tangential components of the magnetization of said paired magnets are opposite, the spaced-apart rotors creating between them a flux which makes closure through adjacent pole sections of counter-directed axial magnetic flux.

According to some embodiments of the invention, the machine comprises a stator positioned between the rotors.

According to some embodiments of the invention, the machine further comprises at least one discoid rotor comprising axially magnetized permanent magnets forming a heteropolar magnetic system having a number of poles equal to the number of poles of each of the spaced-apart end rotors.

According to an aspect of some embodiments of the present invention there is provided a rotor for an axial air-gap electric machine providing more than 90° of the amount of flux available from a Halbach system of comparable size and weight and comprising only two types of permanent magnet components.

According to some embodiments of the invention, the two types of permanent magnet components are of same shape and differ in their magnetic orientations.

According to an aspect of some embodiments of the present invention there is provided a method of constructing a rotor for an axial air-gap electric machine, comprising:
a) constructing first and second sets of pairs of permanent magnets; and
b) constructing a discoidal assembly of the pairs of magnets in such a way that a pair of magnets of the first set alternates with a pair of magnets of the second set around the discoidal assembly, wherein
   i) magnet pairs of both the first and second sets so positioned and oriented that axial components of magnetizations of each pair are co-directional;
   ii) magnet pairs of the first set are so positioned and oriented that tangential components of their magnetization are directed towards each other; and
   iii) magnet pairs of the second set are so positioned and oriented tangential components their magnetization are directed away from each other.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.
In the drawings:
FIG. 1 presents an isometric view of a rotor with separated permanent magnet pieces magnetized through the thickness and glued on a yoke disk face, and also a cross-section of an electric machine utilizing the rotor shown in the isometric view, according to a method of prior art;
FIG. 2 presents a cross-section and a top view of a rotor with stacked permanent magnet pieces magnetized through the thickness and secured on a discoidal yoke, according to a method of prior art;
FIG. 3 is an isometric view of a rotor, including a detail section which shows a classic design Halbach design, according to a method of prior art;
FIG. 4 is an isometric view of two rotors, mechanically connected and facing each other, a Halbach design according to a method of prior art;
FIG. 5 presents an additional view of two Halbach rotors facing each other, and further presents a cross-section of an electric machine utilizing such rotors, according to a method of prior art;
FIG. 6 presents side and top views of a yokeless rotor with axially magnetized permanent magnet sectors and interposed soft magnetic sectors, according to a method of prior art;
FIG. 7 presents a top view and a detailed segment of an isometric view of a yokeless rotor with alternating axially and tangentially magnetized permanent magnet sectors, according to a method of prior art;
FIG. 8A is an exploded isometric view of a rotor with a planar yoke, according to some embodiments of the present invention;
FIG. 8B is an isometric view of the rotor of FIG. 8A, and comprises an insert showing a more detailed view of a portion of that rotor, according to some embodiments of the present invention;
FIG. 9 is an isometric view with a detailed fragment of a rotor with a planar yoke wherein each pole is made from 2 butt-jointed magnet pieces each magnetized by about 45 degrees to the axis and the poles are distanced from each other, according to some embodiments of the present invention;
FIG. 10A is an exploded isometric view of a rotor with a ribbed yoke in which each pole is made from 2 butt-jointed magnet pieces each magnetized by about 45 degrees to the axis and the poles are distanced from each other, according to some embodiments of the invention;
FIG. 10B is an isometric view of the rotor of FIG. 10A, and comprises an insert showing a more detailed view of a portion of that rotor, according to some embodiments of the present invention;
FIG. 11A is an exploded isometric view of a rotor with a ribbed yoke according to some embodiments of the invention where each pole is made from 2 distanced magnet pieces each magnetized by about 45 degrees to the axis and the poles are distanced from each other, according to some embodiments of the invention;
FIG. 11B is an isometric view of the rotor disclosed in FIG. 11A, and comprises an insert showing a more detailed view of a portion of that rotor, according to some embodiments of the invention;
FIG. 12A is an exploded isometric view of a rotor without yoke wherein each pole is made from 2 butt-jointed magnet pieces each magnetized by about 45 degrees to the axis, the poles are distanced from each other and tangentially magnetized sectors are interposed between them, according to some embodiments of the invention;
FIG. 12B is an isometric view with a detailed fragment of the rotor disclosed in FIG. 12A, according to some embodiments of the invention;
FIG. 13A is an exploded isometric view of a rotor with a planar yoke in which each pole is made from two layers, a first layer as disclosed in FIG. 8A, and a second layer which comprises butt-jointed alternatingly axially magnetized magnet pieces, according to some embodiments of the invention;
FIG. 13B is an isometric view of the rotor disclosed in FIG. 13A, and comprises an insert showing a more detailed view of a portion of that rotor, according to some embodiments of the invention;
FIG. 14 is an isometric view of a rotor assembly useable in an axial field electric machine, according to some embodiments of the invention;
FIG. 15 is an exploded view of an axial field electric motor utilizing a rotor assembly made according to some embodiments of the invention;
FIG. 16A shows fragmentary isometric views of several prior art designs for which working magnetic flux was approximately calculated, the calculation/estimation results being shown in FIG. 17;
FIG. 16B shows fragmentary isometric views of several designs according to embodiments of the present invention, for which working magnetic flux was approximately calculated, the calculation/estimation results being shown in FIG. 17;
FIG. 17 is a table showing approximate calculated/estimated working magnetic flux for designs shown in FIGs. 16A and 16B.
FIG. 18A is an isometric view of a multi-stage modular axial-flux machine utilizing two rotors according to some embodiments of the present invention, two conventional axial flux permanent magnet rotors and three coreless stators, each positioned between a pair of rotors, according to some embodiments of the present invention;
FIG. 18B is a cross sectional view of the axial flux machine disclosed in FIG. 18A, according to some embodiments of the present invention;
FIG. 19 is an isometric view of a conventional axial flux permanent magnet rotor to be used in an axial flux machine disclosed in FIGs. 18.

### DESCRIPTION OF SPECIFIC EMBODIMENTS OF THE INVENTION

The present invention, in some embodiments thereof, relates to rotors for electric machines such as an electric motors and/or generators, and, more particularly, but not exclusively, to patterns for magnetic elements of planar rotors for axial air-gap electric machines.

As used throughout the present disclosure and in the claims below, the terms "machine" and "electrical machine" are to be understood to include both electric motors and electric generators.

### PREVIOUSLY KNOWN DESIGNS

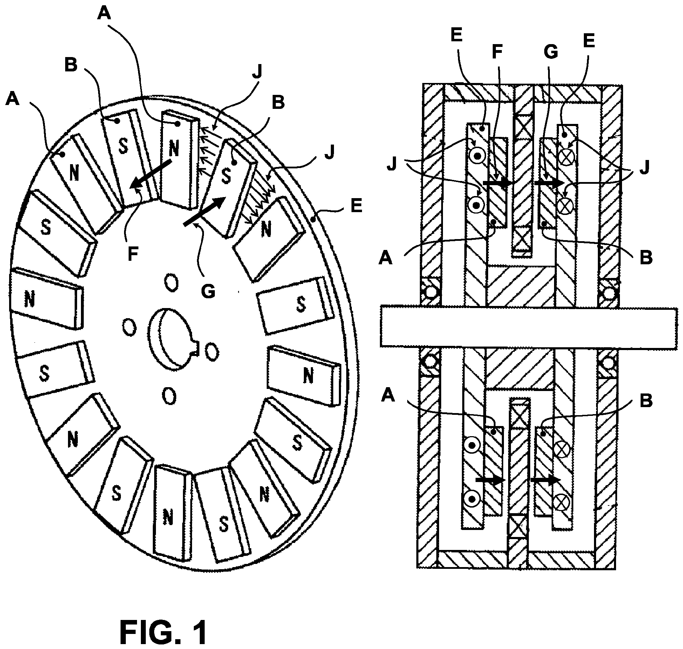

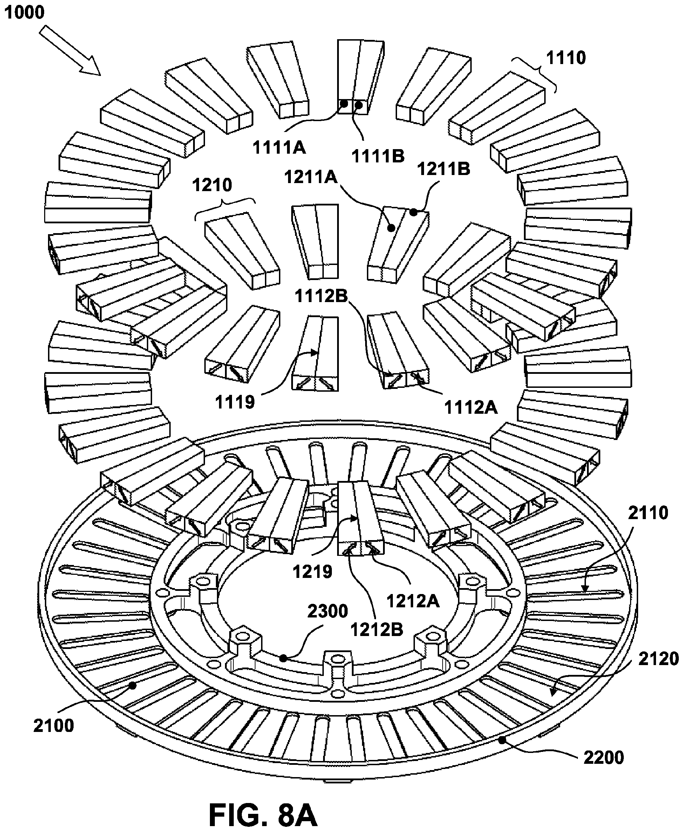

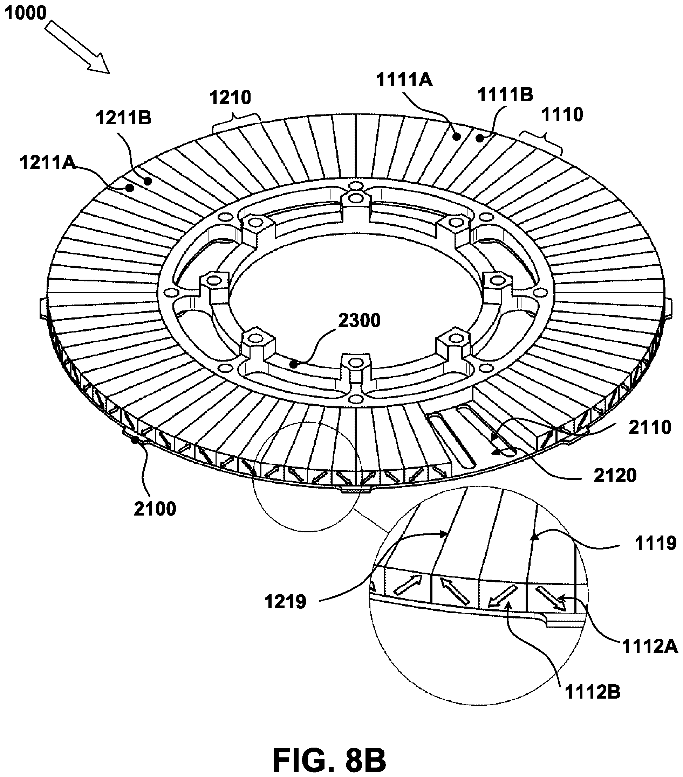

For purposes of better understanding some embodiments of the present invention, as illustrated in Figures 8-19 of the drawings, reference is first made to the construction and operation of several known designs for rotors, as illustrated in Figures 1-7.

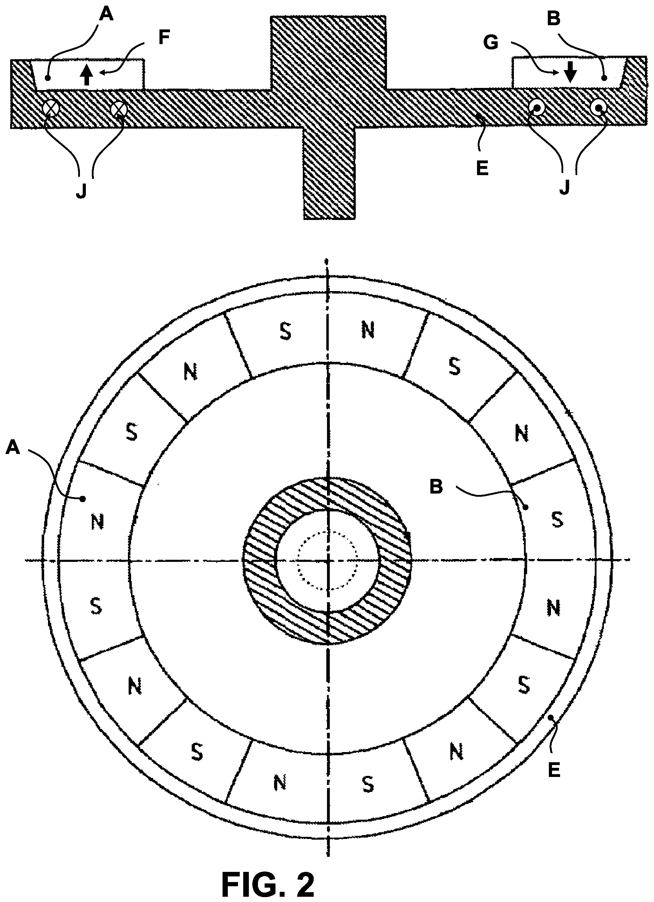

Attention is first drawn to Figures 1 and 2, which show heteropolar magnet systems of axial flux rotors, according to methods of prior art. Figure 1 is adapted from US patent application 2010/0253173 A1 of Koji Miyata et al. Figure 2 is adapted from US patent 7,084,548 B1 to Christopher W. Gabrys Grassman. These systems, which may be thought of as representative of the genre, each comprise a plurality of identical permanent magnet pieces magnetized through the thickness. The magnets are alternatively secured on a yoke face (usually magnets attached by their N-face alternate with magnets attached by their S-face, alternating around the rotor) to build a heteropolar magnetization. With reference the face of a rotor that will be adjacent to a stator in an electric machine, (the "working face" herein), each magnet piece engenders a magnet pole, either a north pole **A** generating essentially outgoing axial flux **F**, or a south pole **B** generating essentially incoming axial flux **G**, and these poles alternate around the rotor. These magnet pieces are placed annularly on the face of a soft magnetic yoke **E** formed as a disc. Yoke **E** functions as a conductor of the tangential magnetic flux **J** between poles **A** and **B**.

The approach taken in systems such as those shown in Figures 1 and 2 enable construction based on a plurality of identical permanent magnet pieces. This fact may significantly simplify design and construction of the systems, but may be disadvantageous in that it requires a rather heavy yoke because it is designed to conduct a rather high interpole magnetic flux. The heavy yoke may be physically disadvantageous in use and may be awkward in construction because of its weight and bulk, and may represent a loss of efficiency because it is a passive part used only to accomplish closure of the magnetic flux field, and does not otherwise contribute to the generation of magnetic energy.

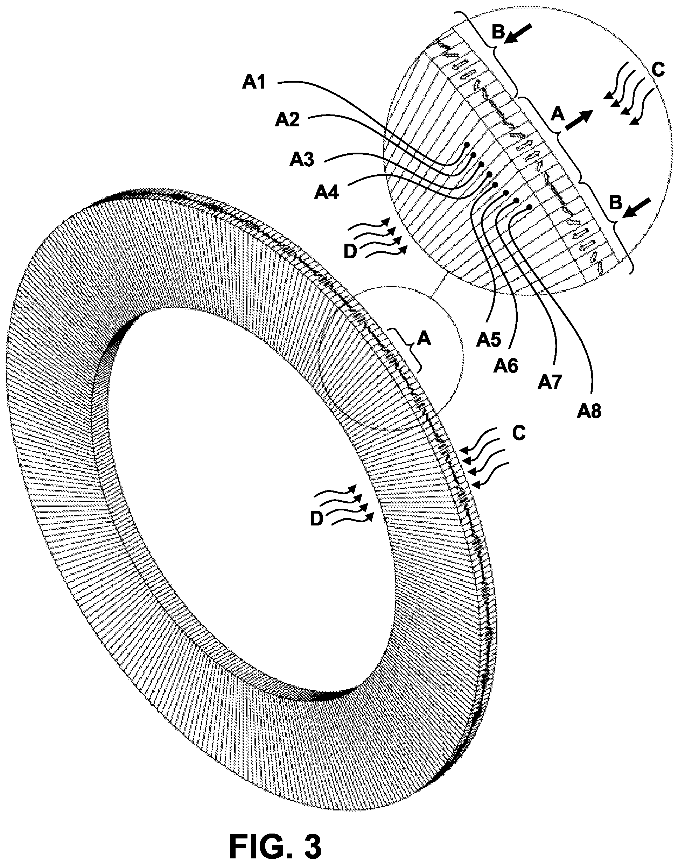

An alternative approach, also known according to methods of prior art, is shown in Figures 3-5. These designs are based on what is known as a "Halbach" array, wherein each magnet pole (either north magnet pole **A** and or south magnet pole **B**) is built from a number of sectorial permanent magnet pieces of about the same shape (eight such pieces are shown in the example in Figure 3). This method enables construction of a rotor which comprises only active magnetic path components which generate magnetic energy, as no yoke may be needed. Each of the sectorial permanent magnet pieces is magnetized at an angle which differs from the magnetization angle of the adjacent piece, e.g. by starting at 0° relative to the rotor axle (tangent magnetization) and finishing at 180° (axial magnetization), as may be seen in Figure 3, where eight pieces are used to make the 180° transition. For example, the pieces which constitute a pole A are labeled in the figure as **A1 - A8**.

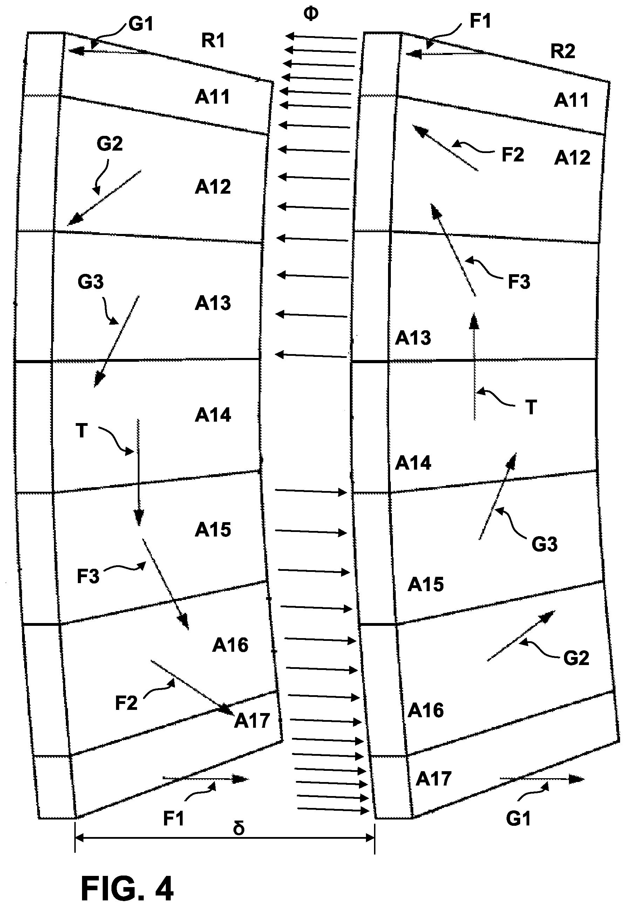

Figure 4 shows another Halbach implementation, wherein two mechanically connected Halbach rotors R1 and R2 face each other, as disclosed in US patent application 2011/024567A1 by Mark J. Blackwelder et al. Figure 4 shows each magnet pole section of each rotor as built from 7 permanent magnet sectors. With reference to one of the rotors on the figure:
- An axially magnetized sector **A11** of half width generates flux **G1** (**F1**);
- a sector **A12** magnetized in an orientation ∼ 30 degrees from the axis direction generates flux **G2** (**F2**);
- a sector **A13** magnetized in an orientation ∼ 60 degrees from the axis direction generates flux **G3** (**F3**);
- a sector **A14** magnetized in an orientation ∼ 90 degrees from the axis direction (tangentially and perpendicular to the axis) generates flux **T**;
- a sector **A15** magnetized in an orientation ∼ 120 degrees with reference to the axis direction generates flux **F3** (**G3**);
- a sector **A16** magnetized in an orientation of ∼ 150 with reference to the axis direction generates flux **F2** (**G2**); and
- An axially magnetized sector **A17** of half width generates flux **G1** (**F1**).
   Since sectors A11 and A17 are identical, there are 6 different sorts of magnet sector pieces. The fluxes G1-G2-G3-T-F3-F2-F1 from rotor R1 together with fluxes G1-G2-G3-T-F3-F2-F1 from rotor R2 build a working magnetic flux Φ concentrated in the operating gap δ between the rotors R1-R2.

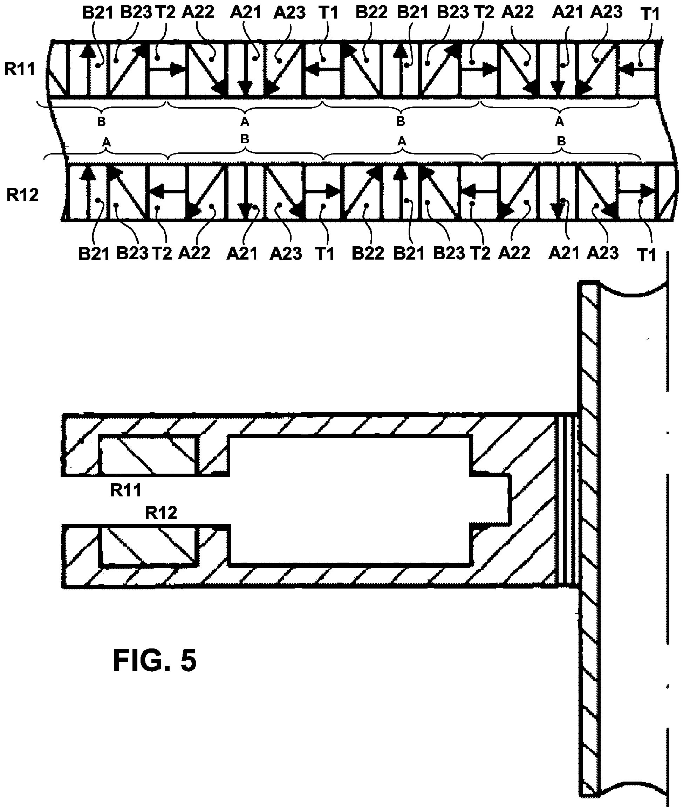

A similar configuration is shown in Figure 5, adapted from U.S. Patent Application 2005/0236918 A1 of Hugo H. van den Bergh et al. Figure 5 shows a detail view of a magnetic system formed by two mechanically connected Halbach rotors **R11-R12** which face each other. The figure also shows a cross section of an electric machine utilizing such rotors. In this configuration, north magnet poles **A** and south magnet poles **B** are each built from 5 permanent magnet sectors:
- 1 axially magnetized permanent magnet sector **A21** (**B21**),
- 1 permanent magnet sector **A22** (**B22**) magnetized ∼60° degrees clockwise to the axle direction,
- 1 permanent magnet sector **A23** (**B23**) magnetized ∼ 60° counter-clockwise, and
- 2 permanent magnet sectors **T1** and **T2** magnetized tangentially.
   Therefore in this construction there are four different sorts of permanent magnet sector pieces used.

The Halbach-based constructions shown in Figures 3-5 may be advantageous in that they may produce good magnetic flux levels. However, they may be disadvantageous because each may require assembling the rotors from numerous different types of magnets, a requirement which may add to cost and complexity of the logistics and assembly processes. Using multiple types of magnet pieces may also lead to multiplication in the number of press-mould tooling and magnetization fixtures required in the manufacturing process of the magnet pieces themselves, since each type may need to be pressed under differently directed domain-orienting magnetic fields, and then may require to be magnetized by differently directed magnetizing fields.

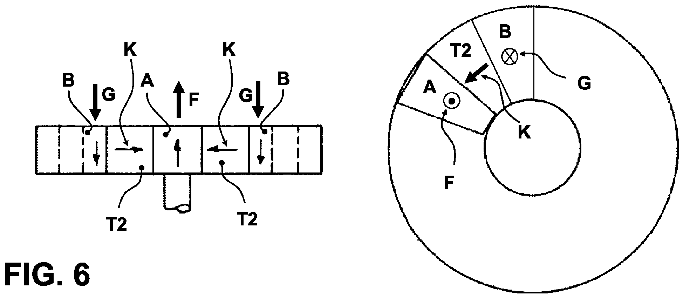

Attention is now drawn to Figure 6, which may be thought of as an attempt to provide a wholly active magnetic path (as does Halbach) with a less complex design, according to methods of prior art. Figure 6 is adapted from U.S. Patent 5,783,885 to Richard F. Post, and shows a yokeless heteropolar magnet system in which axially magnetized sectors (N and S, labeled A and B in the figure) alternate with tangentially magnetized sectors T2. North sectors **A**, generating essentially axial flux **F** and south sectors **B** generating essentially axial flux **G** are interposed with interpole magnet sectors **T2** generating tangential fluxes **K**. This design is relatively simple, but it does not provide a magnetic field which is completely concentrated near the working face of the disk, as the case with Halbach designs. Rather than distributing the magnetic flux above the working face (in the figure, the side where fluxes **F** and **G** are marked), as would typically be produced by a Halbach design, the design shown in Figure 6 may provide only about 80% of flux above the working face. Applicant estimates that roughly 20% of the magnetic field will leak to the wrong side of the disk. In other words, the design shown in Figure 6 may be much less efficient than Halbach designs.

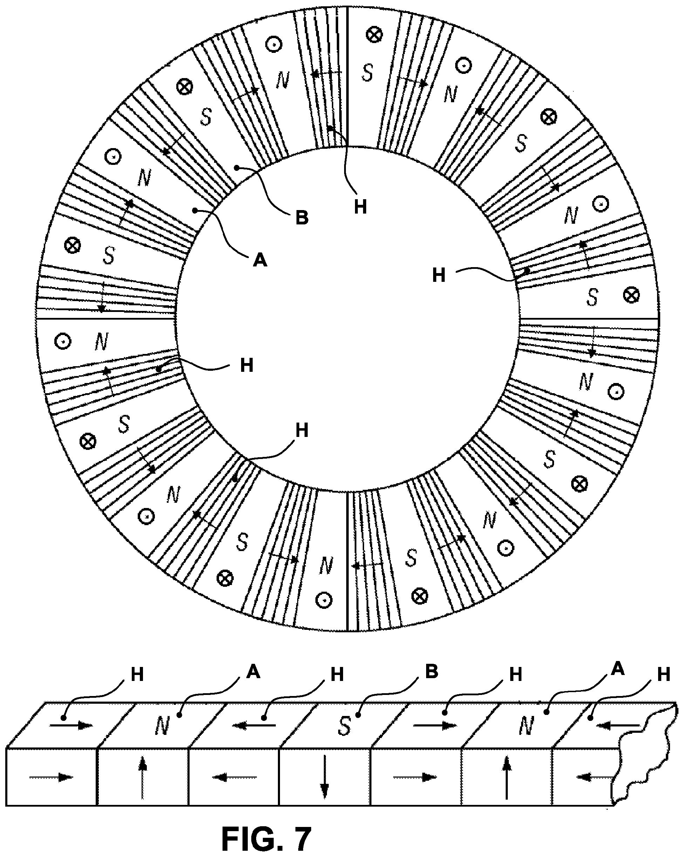

Attention is now drawn to Figure 7, which shows another yokeless heteropolar magnet system, according to methods of prior art. Figure 7 is adapted from U.S. Patent Application 2011/024567A1 by Mark J. Blackwelder et al. Figure 7 shows a yokeless system in which soft magnetic sectors H are interposed between north sectors **A** and south sectors **B**. Sectors A and B generate essentially axial flux. Soft magnetic sectors **H** provide a path for closure of those fluxes. This design may also fail to provide a magnetic field which is completely concentrated near the working face of the disk. Rather, Applicant estimates that the design of Figure 7 may leave a substantial part of the magnetic field (perhaps up to about 30%) beyond the disk and near its external non-working face. So this prior art design, while relatively simple because it may be constructed using only one type of axially magnetized simple prismatic magnet, may be relatively inefficient.

As discussed briefly above, prior art systems similar to those shown in Figures 1 and 2 may suffer from low efficiency in the use of the spatial volume available for the rotor, potentially resulting in lowered electrical efficiency. Prior art systems similar to those shown in Figures 3-5 may provide higher efficiency, but may suffer from greater complexity, and concomitant resultant disadvantages such as greater cost of construction as compared to systems such as those of Figures 1 and 2. Systems such as those presented in Figures 6 and 7 are less complex and may be easier to construct, but may not be very efficient.

### DESCRIPTIONS OF SOME EMBODIMENTS

The scope of protection of the invention is defined entirely by the accompanying set of claims.

Some embodiments described herein may provide greater efficiency in the use of space available for a planar rotor of an electric machine as compared to some electrical machine designs known to prior art. Some embodiments described herein may be simpler, easier, and/or less expensive to build as compared to space-efficient designs known to prior art.

In some embodiments, an axial air-gap electric machine with a rotational axis comprises at least one discoidal rotor having alternating north and south magnetic poles. Optionally, each pole consists of a pair of magnets whose magnetization orientation is tilted by between 15° and 75° and/or by between 30° and 60° and/or optionally by about 45° degrees with respect to the orientation of the rotational axis.

For each pair, the axial components of the magnetization of the component magnets are co-directional, while their tangential components are counter-directional.

In a first set of pairs, the magnetizations of the two magnets of the pair are oriented so that their axial components (optionally of equal strength) are oriented towards the working face of the rotor and their tangential components are oriented towards each other. Pairs of this first set create the north poles of the rotor.

In a second set of pairs, the magnetization of the two magnets of the pair are oriented so that their axial components (optionally of equal strength) are oriented away from the working face of the rotor and their tangential components are oriented away from each other. Pairs of this second set create the south poles of the rotor.

In some embodiments, a pair from the first set alternates with a pair from the second set around the rotor, creating alternating north and south poles around the rotor.

In some embodiments the magnets are essentially identical in physical form while differing in magnetic orientation. In some embodiments, the magnets are butt-jointed as shown in Figure 8A.

In some embodiments, some or all of the component magnets are slightly spaced from each other, as discussed below. In some embodiments magnets having a tangential magnetization component directed in a clockwise direction alternate with magnets having a tangential magnetization component directed in a counterclockwise direction, and both are interposed between south and north poles and alternated with each other.

In some embodiments a soft magnetic back yoke is provided. In some embodiments the yoke is provided with ribs. In some embodiments the yoke is provided without ribs. In some embodiments the yoke is provided with openings, optionally radial slot-like openings, which may be useful for cooling. In some embodiments, no yoke openings are provided.

Embodiments of the present invention can be constructed using various types of magnetic material and using magnetic elements of varying dimensions. In general it is noted that in the figures presented herein, embodiments are generally shown as having configurations which are generally symmetrical formats, for example having magnetic pieces of identical sizes and shapes positioned radially and symmetrically, and with magnetic poles uniformly spaced and of uniform size. However, it is noted that such identity and symmetry of sizes and shapes and positions and spacings is not to be considered limiting: the invention may be practiced and embodiments may be constructed using magnetic and non-magnetic components which may be of same and/or of varying sizes and shapes and which may be positioned symmetrically and/or asymmetrically, radially and/or non-radially, with uniform and/or non-uniform pole sizes and spacings and magnetic orientations, and all such variations are contemplated as embodiments of the present invention.

It is further noted that with reference to various embodiments described herein, reference is made to magnetic components and to magnetic flux having particular orientations and directions. For example, various references are made to elements whose magnetic orientation has an "axial" component and a "tangential" component. It is noted that such components also have an additional component neither axial nor tangential, and that components so oriented are also included in the scope of the described invention.

Some embodiments comprise only two types of permanent magnet pieces, and in some embodiments which comprise only two types of permanent magnet pieces those pieces optionally have a same physical shape and a different magnetic orientation.

In general, the Applicant has found good efficiencies to be achieved when thickness of the magnetic elements is approximately half the length of the magnetic poles constructed by the magnetic pieces as explained below, but this consideration also is not to be considered as limiting, and constructions of various thickness and/or of relative dimensions differing from those shown in exemplary embodiments herein are also contemplated as embodiments of the invention.

In some embodiments, an electric machine comprises rotors according to embodiments of the invention described herein, and further comprises one or more conventional axial flux permanent magnet rotors.

In some embodiments of the invention, a planar object has at least one and optionally two surfaces which are nearly geometrically planar, over at least 80% or 90% or more of their surface area. Optionally, the surface is nearly planar when it is within 5% or 10% of a flat plane passing through the surface, the percentage being the arithmetic average thickness of the object. In an exemplary embodiment of the invention, the two surfaces are substantially parallel (e.g., with an angle of between 175 and 195 degrees between two planes that each approximate a surface (e.g., using an RMS approximation of mass of parts of the surface)).

In an exemplary embodiment of the invention, the planar object has a thickness with is less than 30%, 20%, 10% or intermediate percentages of a maximal dimension of the object.

In some embodiments, a disk shape is used which approximates (e.g., within 10%, 5% or better per dimension) a straight prism with dimensions of its base surfaces which are less (e.g., 20%, 10% or intermediate or smaller percentages) of its height.

In some embodiments, a disk-shaped object is a planar object, for example, with a diameter which is less than 20%, 10% or intermediate percentages of its maximal extent in other dimensions.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

Attention is now drawn to Figure 8A, which is an exploded perspective view of a rotor for an electrical machine in which at least some magnetic poles (each pole, in this exemplary figure) comprises two side-facing magnets, according to some embodiments of the present invention. As shown in the figure, in some embodiments at least some poles (each pole in this exemplary figure) are made from two butt-jointed magnets each magnetized by an angle of between 30° and 60° to the axis, and optionally about 45°. (In some embodiments, magnetization angles of between 15° and 75° are contemplated.) The tangential magnetization components of these butt-jointed magnets are oppositely directed, while their axial magnetization components are co-directed. The result is alternating north and south poles. In some embodiments the butt-jointed magnets are of identical shapes and/or differing magnetic orientations.

In some embodiments, the magnets are radially oriented. In some embodiments pairs of magnets forming poles are also butt-jointed to each other.

Figure 8A shows an exemplary rotor 1000 having a planar frame-like yoke **2100** on which 20 south poles **1110** and 20 north poles **1210** are positioned. Poles **1110** and **1210** are secured on yoke **2100** and retained thereon by a hub **2300** and optionally by a ring **2200**.

At least some south poles **1110** (each south pole, in this exemplary and non-limiting embodiment) consists of two essentially identical butt-jointed magnetized pieces **1111A** and **1111B**. In some embodiments the two pieces are magnetized by about 45° (in some embodiments by between 30° and 60°, in some embodiments by between 15° and 75°) relative to the axis as shown by arrows **1112A** and **1112B** respectively. The tangential components of these arrows **1112A** and **1112B** of these radial butt-jointed magnet pieces are oppositely directed while their axial magnetization components are co-directed toward the yoke **2100**.

Similarly, at least some north poles **1210** (each north pole in this exemplary and non-limiting embodiment) consists of two essentially identical butt-jointed pieces **1211A** and **1211B** magnetized by about 45 degrees (in some embodiments by between 30° and 60°, in some embodiments by between 15° and 75°) relative to the axis as shown by arrows **1212A** and **1212B** respectively. The tangential components of these arrows **1212A** and **1212B** are also oppositely directed while their axial magnetization components are co-directed outward from the yoke **2100**. The poles **1110** and **1210** themselves are also optionally butt-jointed to each other.

In some embodiments, adjacent faces **1119** of south poles **1110** and adjacent faces **1219** of north poles **1210** are placed on radial yoke sections **2120**. Inter-pole border sides are optionally placed on radial slots **2110**. Twenty north and twenty south poles are shown in the Figure, but it is to be understood that that number (in this figure and in other figures herein) is exemplary and not limiting. North and south poles as shown are oriented at 180° from each other, but this characteristic also is exemplary and not limiting.

Figure 8B shows a non-exploded view of the rotor of Figure 8A and an expanded detail of a portion of that rotor, according to some embodiments of the present invention.

The rotor presented in figures 8A and 8B, as well as other designs described herein, may have a magnetic efficiency near that of an ideal Halbach system. Some embodiments, for example, provide more than 90° of the amount of flux available from a Halbach system of comparable size and weight; yet comprise only two types of permanent magnet components. However, construction and manufacture of an embodiment such as that presented in Figures 8A and 8B may be more simple and less costly than corresponding Halbach systems, since (as shown above in examples from prior art) Halbach systems (for example, that shown in Figure 7) comprise multiple different magnetic units and/or multiple orientations for similar magnetic units, whereas only two orientations and/or two types magnetic unit components suffice to construct an embodiment as shown in Figures 8A and 8B.

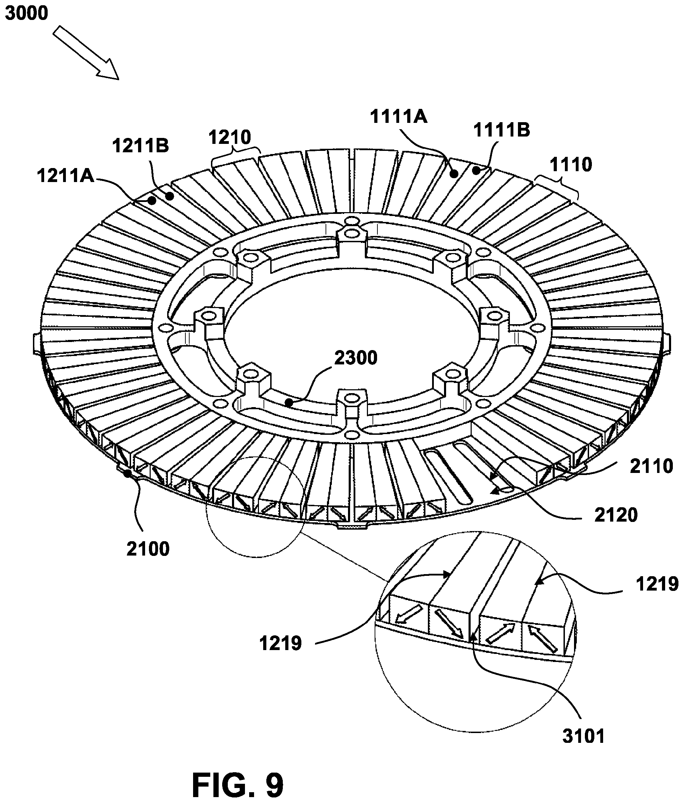

Attention is now drawn to Figure 9, which is a view of a rotor according to an embodiment of the present invention. Rotor **3000** differs from rotor **1000** in that rotor **3000** comprises gaps **3101** between south poles **1110** and north poles **1210**. In some embodiments gaps **3101** are useful to provide improved ventilation through the gaps. A plurality of identical gaps are shown in the figure, but it is to be understood that this configuration is exemplary and not limiting, gaps **3101** may be of non-identical sizes and may optionally be present between some poles and not present between other poles.

In some embodiments gaps **3101** may be used for construction elements. For example, gaps **3101** may be filled by an epoxy compound.

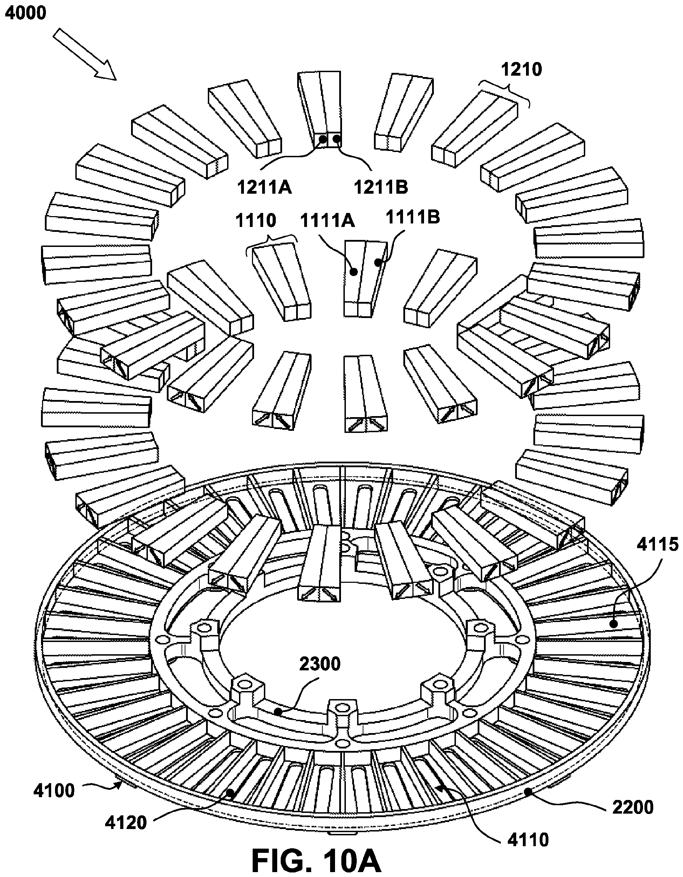

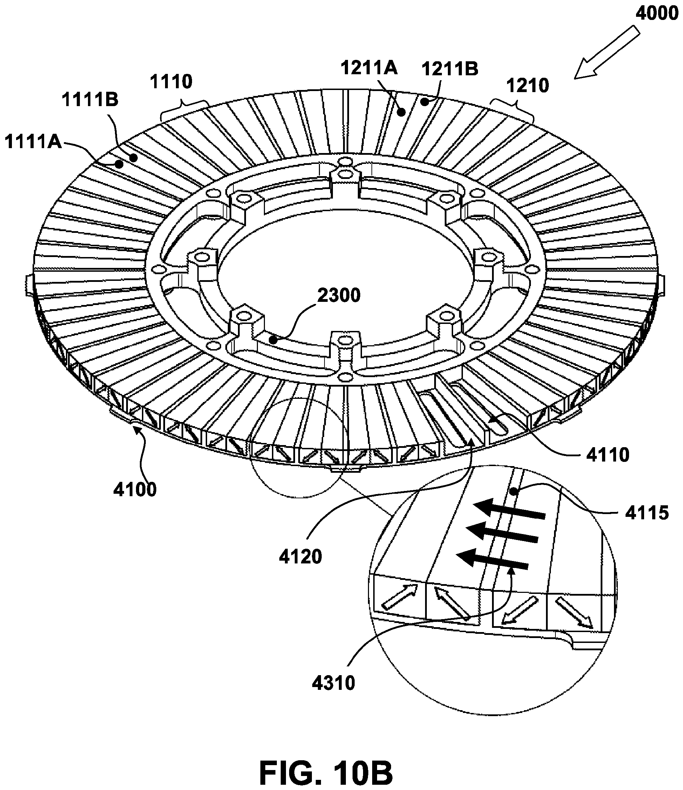

Attention is now drawn to Figure 10A, which shows an exploded view of a rotor **4000**, and to Figure 10B showing a perspective and a detail view of that rotor, according to some embodiments of the present invention. Rotor **4000** differs from rotor **3000** in that rotor 4000 comprises a ribbed yoke **4100**, whereas rotor **3000** comprises a planar yoke. Rotor **4000** comprises ribs **4115** placed on radial yoke sections **4120** between radial slots **4110**, and which are therefore positioned between south poles **1110** and north poles **1210**. Ribs **4115** are made from soft-magnetic material, so as to conduct magnetic flux as shown by arrows **4310** of Figure 10B. In some embodiments ribs **4115** are constructed as integral parts of yoke **4100**. As may be seen from the figure, two butt-jointed permanent magnets may be positioned between each pair of ribs, or between some pairs of ribs.

Ribs 4115 may be advantageous in that they may improve rotor rigidity. To avoid a decrease in magnetic flux caused by the gaps between successive permanent magnets thus created, in some embodiments ribs 4115 may be constructed of magnetic flux-conducting material.

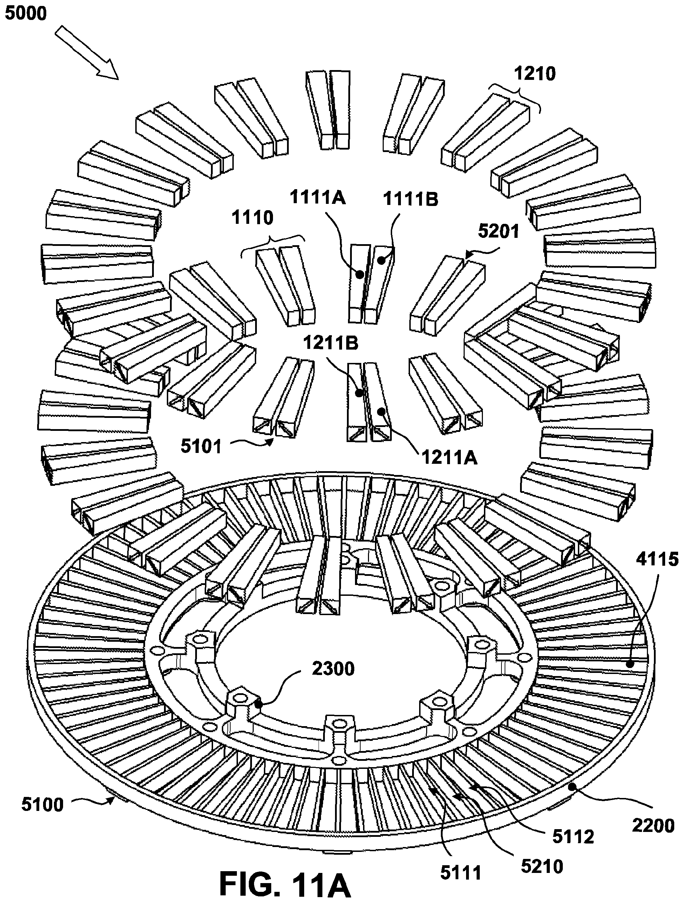

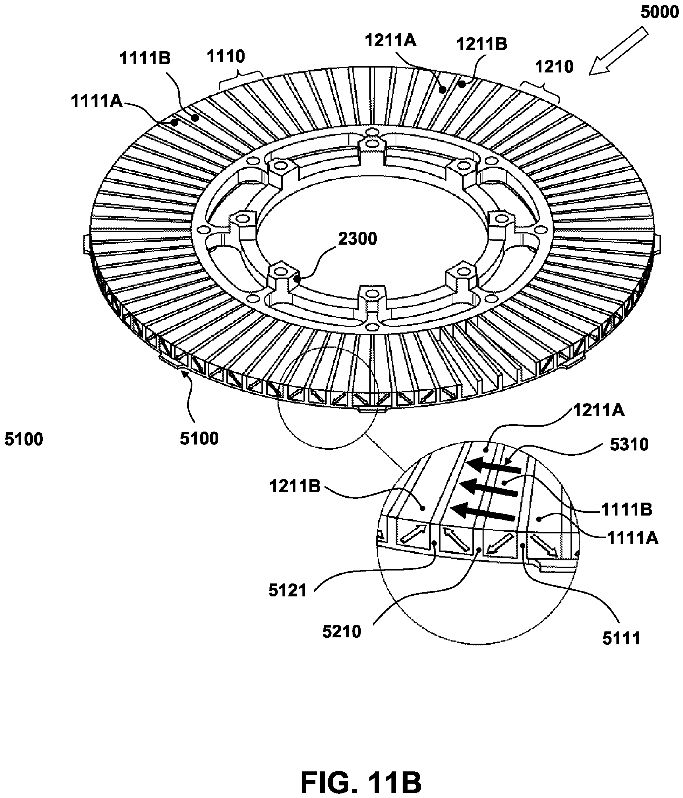

Attention is now drawn to Figure 11A showing an exploded view of a rotor 5000, also having a ribbed yoke, and to Figure 11B showing a perspective view and a detail view of rotor 5000, according to some embodiments of the present invention.

Figure 11A shows rotor 5000 having a ribbed yoke 5100 on which (in the exemplary embodiment pictured) 20 south poles 1110 and 20 north poles 1210 are allocated. Some or all of poles 1110 and 1210 may each comprise two butt-jointed magnets. In some embodiments these south and north poles are secured on yoke 5100 and retained thereon by a hub 2300, ribs 5111, 5112, and 5210, and/or optionally by a ring 2200. Optionally each south pole 1110 consists of two optionally identically shaped magnets 1111A-1111B magnetized by about 45° (in some embodiments between 30° and 60°, in some embodiments between 15° and 75°) relative to the axis in different tangential directions toward yoke 5100 as shown by the small arrows in the figure. Magnets 1111A and 1111B are separated by spaced gaps 5101. Similarly, optionally some or each north pole 1210 consists of two essentially identical magnets 1211A-1211B magnetized by about 45° (in some embodiments between 30° and 60°, in some embodiments between 15° and 75°) relative to the axis in different tangential directions toward yoke 5100 as shown by the small arrows in the figure. Magnets 1211A and 1211B are also optionally separated by gaps 5101.

Yoke ribs 5111, which may optionally be made of non-magnetic material, are interposed between magnet pieces 1111A-1111B of south poles 1110. Similarly, yoke ribs 5121, which may optionally be made from non-magnetic material, are optionally interposed between magnet pieces 1211A-1211B of north poles 1210.

Yoke ribs 5210, which separate north poles 1110 from south poles 1120, are optionally made of soft magnetic material. Ribs 5210 conduct magnetic flux as shown by arrows 5310 and may optionally be made as part of yoke 5100. The ribbed structure of rotor 5000 significantly improves rotor rigidity, yet the inter-magnet gaps may not decrease the flux since they may be filled by magnetic flux-conducting material.

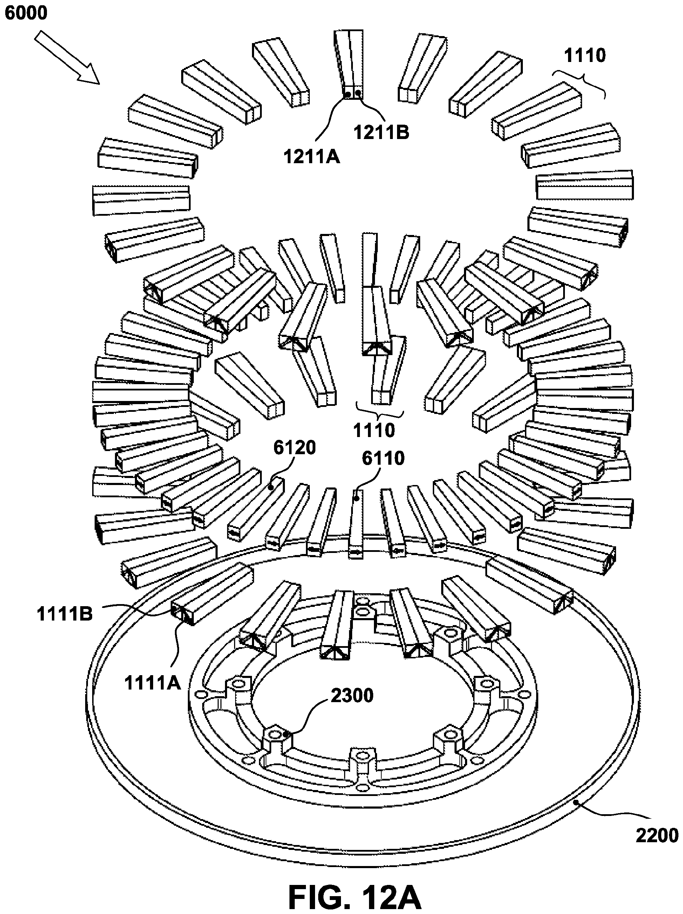

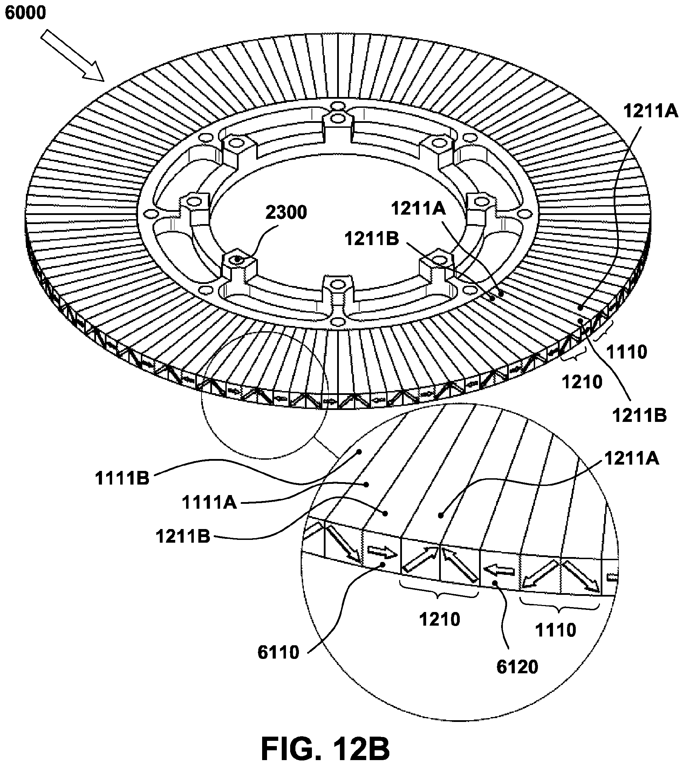

Attention is now drawn to Figures 12A and 12B. Figure 12A presents an exploded view of a yokeless rotor 6000, and Figure 12B presents a perspective view and a detailed view of rotor 6000, according to some embodiments of the present invention.

Exemplary rotor 6000 comprises 20 south poles 1110, 20 north poles 1210, interpole magnet pieces 6110 magnetized tangentially in a counter-clockwise direction and interpole magnet pieces 6120 magnetized tangentially in clockwise direction. Pieces 6110 are positioned counter-clockwise of south poles 1110 and oriented in a counter-clockwise direction, while pieces 6120 are allocated clockwise of north poles 1210 and oriented in a clockwise direction. Optionally, all magnet pieces 1111A, 1111B, 1211A, 1211B, 6110, 6120 are retained by a hub 2300 and ring 2200. Each south pole 1110 consists of two (optionally having a same shape and/or optionally butt-jointed) magnet pieces 1111A and 1111B magnetized by about 45° degrees (in some embodiments, between 30° and 60°, in some embodiments between 15° and 75°) relative to the rotational axis, so that axial components of their magnetization are directed outward from the working face, and the two magnets of the pair have tangential magnetization components oriented in different tangential directions, as shown by arrows. Similarly each north pole 1210 consists of two (optionally having a same shape and/or optionally butt-jointed) magnetic pieces 1211A and 1211B magnetized by about 45° degrees (in some embodiments, between 30° and 60°, in some embodiments between 15° and 75°) relative to the axis, their magnetization being oriented toward the working face of the rotor and having tangential directions different one from the other, as shown by arrows. Yokeless rotor 6000 may be useful in contexts where totally steel-less construction is required.

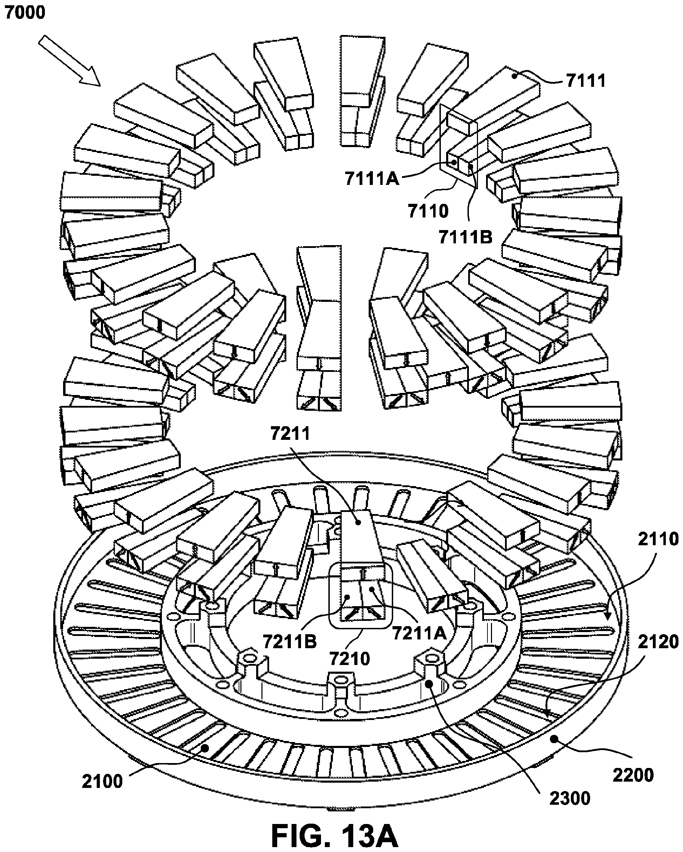

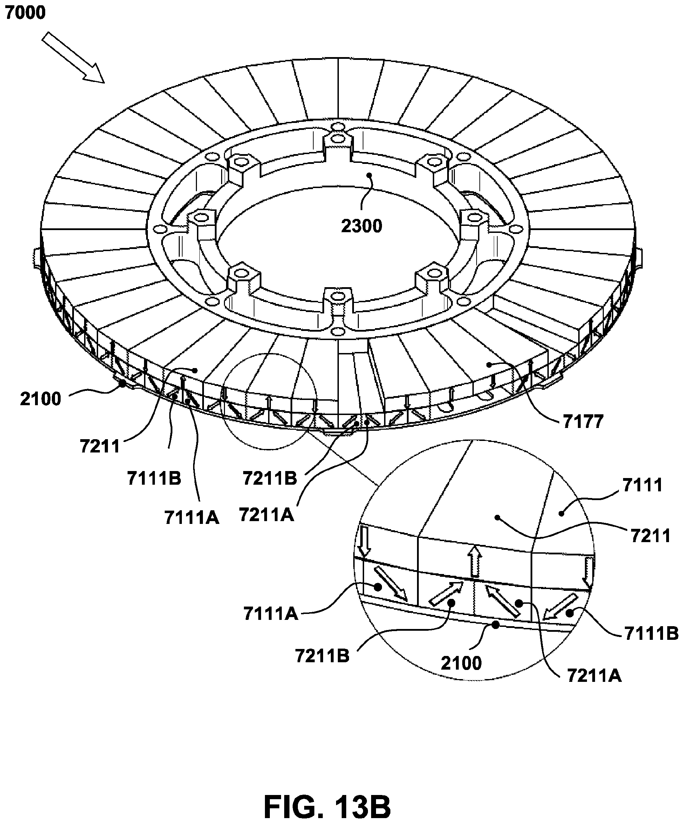

Attention is now drawn to Figures 13A and 13B, which present a two-magnet layer rotor 7000 optionally comprising a planar frame-like yoke 2100 on which (in this non-limiting exemplary embodiment) 20 south poles 7110 and 20 north poles 7210 are provided and are optionally secured on yoke 2100 and retained thereon by a hub 2300 and optionally by a ring 2200. Each south pole 7110 consists of 2 magnet layers as shown in the figure:
- a first layer like that disclosed in Figure 8, consists of two (optionally same-shaped, optionally butt-jointed) magnetic pieces 7111A and 7111B magnetized by about 45° (or optionally 30°-60°, or optionally 15°-75°) to the axis and away from each other and away from the working face and toward yoke 2100 (if present); and
- a second layer which comprises a magnet piece 7111 axially magnetized away from the working face and toward yoke 2100 if present.

In similar manner, each north pole 7210 comprises two magnet layers, a first layer like that disclosed in Figure 8 and consisting of two optionally identically shaped optionally butt-jointed pieces 7211A and 7211B each magnetized by about 45° (or optionally 30°-60°, or optionally 15°-75°) to the axis outward from yoke 2100, and a second layer which is a single magnet piece 7211 axially magnetized toward the working face and away from yoke 2100 if present.

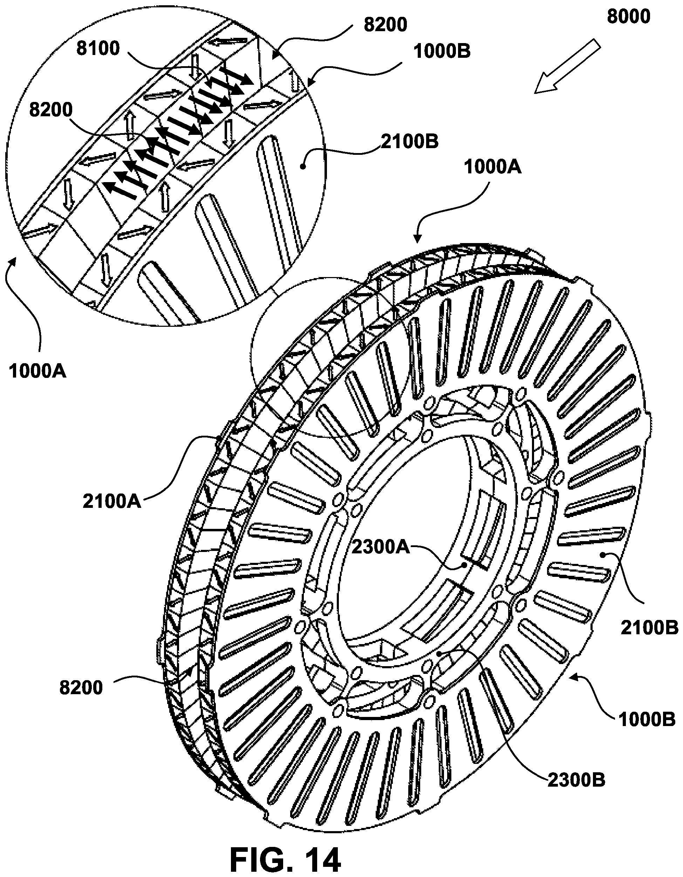

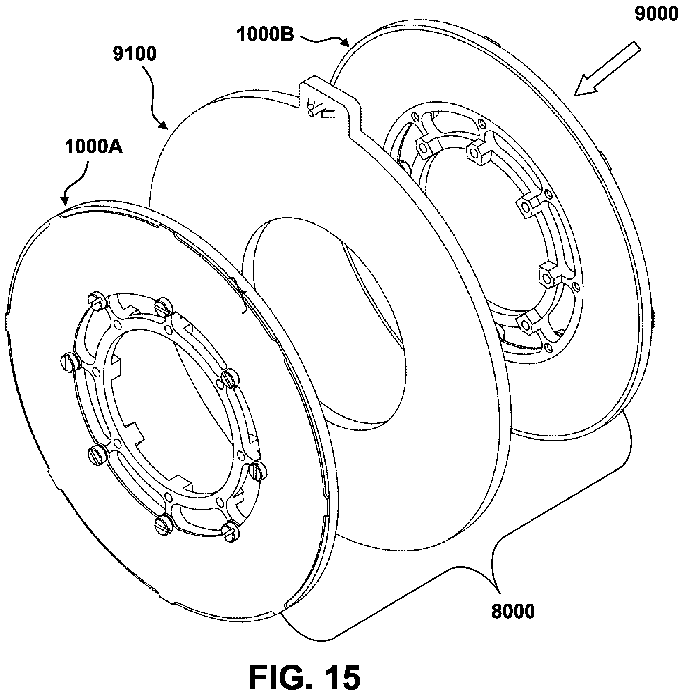

Attention is now drawn to Figures 14 and 15, which shows an exemplary rotor assembly 8000 comprising two identical rotors 1000A and 1000B as disclosed in Figure 8 and useable in an axial field electric machine. As shown by the arrows in the insert, a magnetic flux is generated in a gap 9300 between the rotors. The flux comprises adjacent pole sections of counter-directed axial magnetic flux 8100 and 8200. Rotors 1000A and 1000B are attracted to each other by the magnetic forces and are held in a fixed physical relationship to each other through hubs 2300A and 2300B providing a desirable value of magnetic flux 8100, 8200. Figure 15 shows how an axial field electric machine 9000 may be constructed using a rotor assembly 8000 as disclosed in Figure 14 and comprising 2 identical rotors 1000A and 1000B, and having a flat disk-type stator 9100 introduced into the gap 8200 between rotors 1000A and 1000B. Distances between rotors and stator are exaggerated for clarity of the figure.

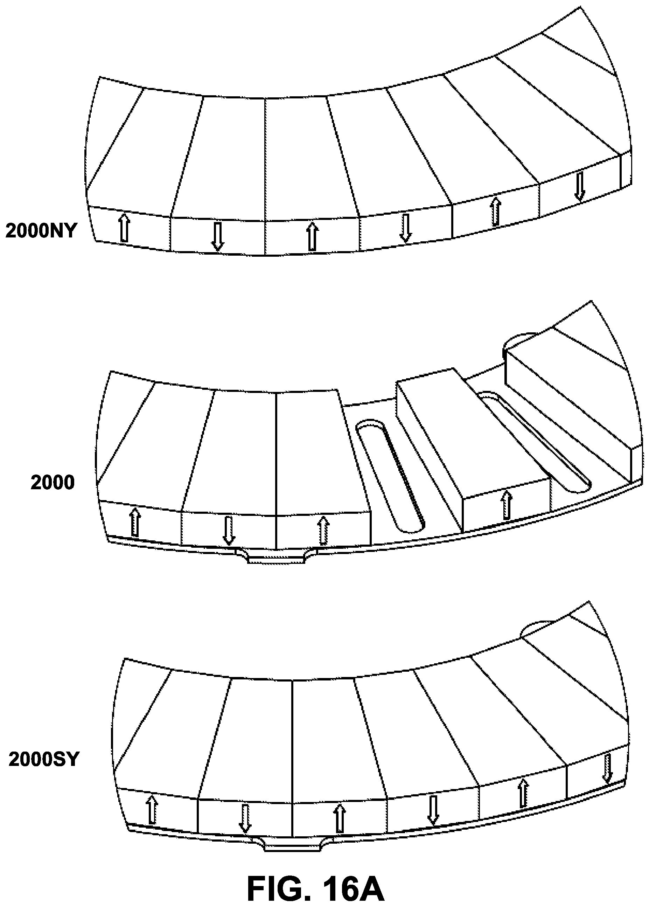

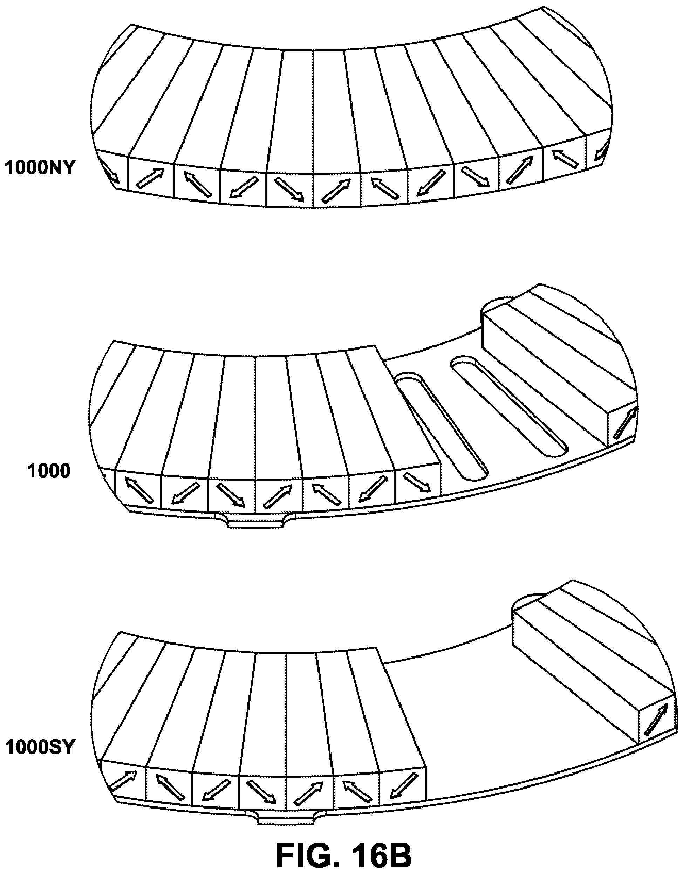

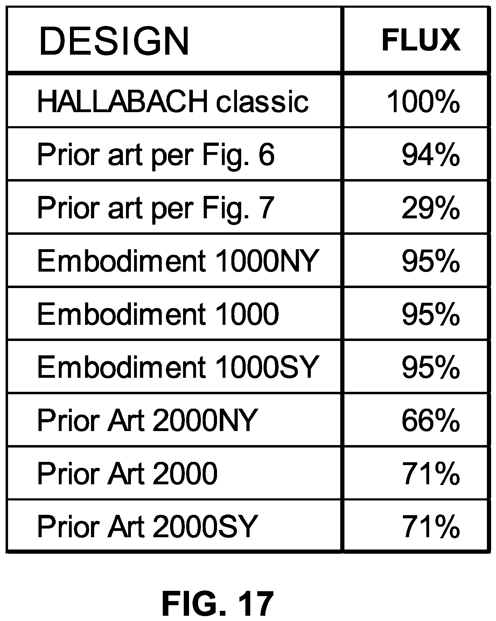

Attention is now drawn to Figures 16 and 17. Figure 17 provides an approximate and non-limiting table of calculation results providing an approximate comparison between the magnetic flux estimated as being generated by some embodiments of the present invention as compared to magnetic flux estimated as being generated by some prior art configurations. The table of Figure 17 compares estimated fluxes generated according to various magnetic designs assuming similar overall dimensions and weight of the components. Figures 16A and 16B are provided to facilitate understanding of the table of Figure 17 by showing in summary fashion various designs for which estimated flux has been calculated.

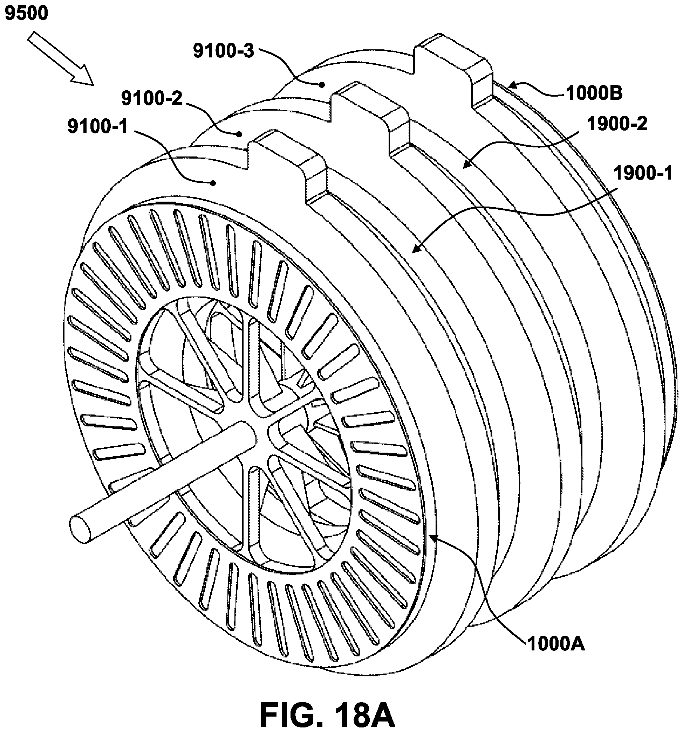

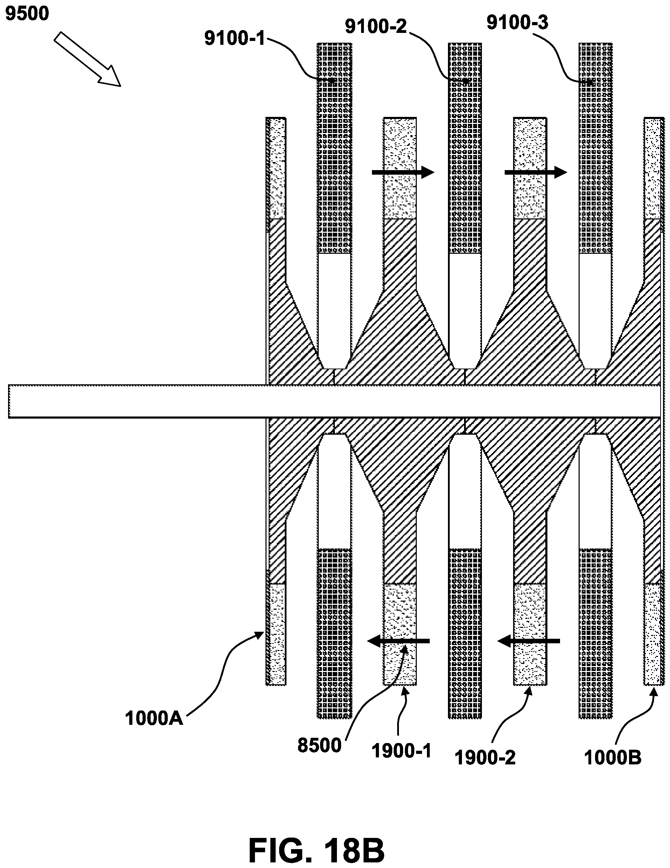

Attention is now drawn to Figure 18 which shows a multi-stage modular axial flux machine 9500 according to some embodiments of the present invention. In an exemplary embodiment shown in Figure 18, machine 9500 comprises two end rotors 1000A and 1000B according to embodiments of the present invention and two conventional axial flux permanent magnet rotors 1900-1, 1900-2, all rotors optionally having same numbers of axially magnetized poles. Machine 9500 further comprises three coreless stators 9100-1, 9100-2, 9100-3 interposed between rotors 1000A, 1000B, 1900-1, 1900-2. Internal rotors 1900-1 and 1900-2 in common with end rotors 1000A and 1000B generate axial magnetic flux 8500 which makes closure in end rotors 1000A and 1000B and crosses stators 9100-1, 9100-2, and 9100-3.

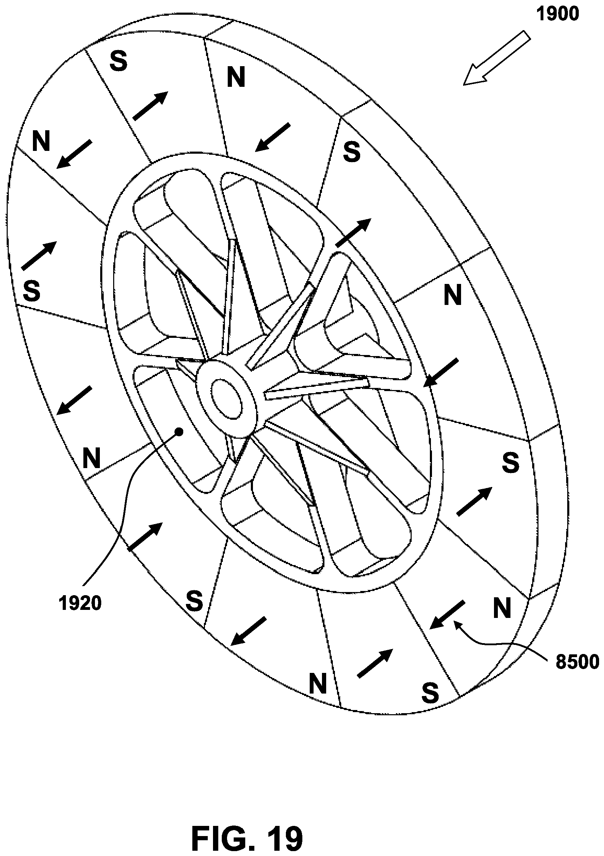

Attention is now drawn to Figure 19 which shows a conventional axial flux permanent magnet rotor 1900 referred in Figs. 18. Rotor 1900 carries alternating north and south magnetic poles magnetized essentially in an axial direction, and optionally comprises a constructive element, e.g. hub 1920 on which said magnet poles are secured.

It is expected that during the life of a patent maturing from this application many relevant electrical machines will be developed, and the scope of the term "electrical machine" is intended to include all such new technologies *a priori*.

As used herein the term "about" refers to ± 15%.

The terms "comprises", "comprising", "includes", "including", "having" and their conjugates mean "including but not limited to".

The term "consisting of' means "including and limited to".

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art.

## Claims

1. A planar rotor of an axial air-gap electric machine having a rotational axis, said rotor comprising a plurality of alternating north and south magnetic poles, each of said north (1210) and south (1110) poles being generated by a pair of permanent magnet pieces (1211A, 1211B, 1111A, 1111B), wherein, for each pair, the axial components of the magnetization of the component magnets are co-directional, while their tangential components are counter-directional, a plurality of said pairs of permanent magnet pieces being arranged adjacent to each other around a disc-shaped planar yoke (2100), thereby
constructing a discoidal assembly, wherein axial components of the magnetization of said paired magnets are co-directional, and tangential components of the magnetization of said paired magnets are opposite.

2. The rotor of claim 1, comprising first and second sets of magnet pairs, magnet pairs of said first set having tangential magnetization components directed towards each other, magnet pairs of said second set having tangential magnetization components directed away from each other, and wherein pairs of said first set alternate with pairs of said second set around said rotor.

3. The rotor of claim 1, wherein said pairs of magnets are magnetized with an orientation of between 30° and 60° to the rotational axis of the rotor.

4. The rotor of claim 1, wherein additional magnet elements having a tangential magnetization component are interposed between said south and north poles.

5. The rotor of claim 4, wherein said additional magnet elements are so oriented that their tangential magnetization component points away from a magnet pair generating a south pole and towards a magnet pair generating a north pole.

6. The rotor of claim 1 wherein each of said south magnetic poles consists of two identical butt-jointed permanent magnet pieces.

7. The rotor of claim 1, wherein at least some of said pairs of magnets are spaced away from adjacent pairs of magnets.

8. The rotor of claim 1, wherein said disc-shaped planar yoke is a soft magnetic yoke.

9. The rotor of claim 8, wherein said yoke comprises ribs which separate each pair of magnets from adjacent pairs of magnets.

10. The rotor of claim 8, wherein said yoke comprises ribs which separate each permanent magnet from adjacent permanent magnets.

11. The rotor of claim 8, wherein said yoke comprise radial slot-like openings.

12. The rotor of claim 1, wherein magnets as described in claim 1 comprise a first layer, and the rotor further comprising a second layer adjacent to said first layer, said second layer comprising axially magnetized permanent magnets.

13. The rotor of claim 12, wherein each of said axially magnetized permanent magnets of said second layer has a magnetic orientation opposite that of the axially magnetized permanent magnets which are adjacent to it on said second layer.

14. The rotor of claim 12, wherein magnets of each of said pairs of magnets are but-jointed to each other and to one of said axially magnetized magnet pieces.

15. An axial air-gap electric machine comprising the rotor of claim 1.

16. The machine of claim 15, comprising a rotor assembly which comprises two spaced-apart rotors each as described by claim 1, creating between them a flux which makes closure through adjacent pole sections of counter-directed axial magnetic flux.

17. The machine of claim 16, further comprising at least one discoid rotor comprising axially magnetized permanent magnets forming a heteropolar magnetic system having a number of poles equal to the number of poles of each of said spaced-apart rotors as described by claim 1.

## Patentansprüche

1. Planarer Rotor einer elektrischen Maschine mit axialem Luftspalt, aufweisend eine Rotationsachse, wobei der Rotor eine Vielzahl von alternierenden magnetischen Nord- und Südpolen aufweist, wobei jeder der magnetischen Nord- (1210) und Südpole (1110) durch ein Paar von Permanentmagnetstücken (1211A, 1211B, 1111A, 1111B) erzeugt wird, wobei, für jedes Paar die axialen Komponenten der Magnetisierung der Komponentenmagnete gleichgerichtet sind, während ihre tangentialen Komponenten entgegengerichtet sind, wobei eine Vielzahl der Paare von Permanentmagnetstücken benachbart zueinander um ein scheibenförmiges planares Joch (2100) angeordnet sind, wodurch
eine scheibenförmigen Anordnung konstruiert wird, wobei axiale Komponenten der Magnetisierung der gepaarten Magnete gleichgerichtet sind und tangentiale Komponenten der Magnetisierung der gepaarten Magnete entgegengesetzt sind.

2. Rotor nach Anspruch 1, umfassend erste und zweite Sätze von Magnetpaaren, wobei Magnetpaare des ersten Satzes tangentiale Magnetisierungskomponenten aufweisen, die aufeinander zu gerichtet sind, Magnetpaare des zweiten Satzes tangentiale Magnetisierungskomponenten aufweisen, die voneinander weg gerichtet sind, und wobei Paare des ersten Satzes mit Paaren des zweiten Satzes um den Rotor abwechseln.

3. Rotor nach Anspruch 1, wobei die Magnetpaare mit einer Orientierung zwischen 30° und 60° zur Drehachse des Rotors magnetisiert sind.

4. Rotor nach Anspruch 1, wobei zusätzliche Magnetelemente mit einer tangentialen Magnetisierungskomponente zwischen den Süd- und dem Nordpolen angeordnet sind.

5. Rotor nach Anspruch 4, wobei die zusätzlichen Magnetelemente so ausgerichtet sind, dass ihre tangentiale Magnetisierungskomponente von einem einen Südpol erzeugenden Magnetpaar weg und zu einem einen Nordpol erzeugenden Magnetpaar zeigt.

6. Rotor nach Anspruch 1, wobei jeder der magnetischen Südpole aus zwei identischen, stumpf aneinanderstoßenden Permanentmagnetstücken besteht.

7. Rotor nach Anspruch 1, wobei mindestens einige der Magnetpaare von benachbarten Magnetpaaren beabstandet sind.

8. Rotor nach Anspruch 1, wobei das scheibenförmige planare Joch ein weichmagnetisches Joch ist.

9. Rotor nach Anspruch 8, wobei das Joch Rippen aufweist, welche jedes Magnetpaar von benachbarten Magnetpaaren trennen.

10. Rotor nach Anspruch 8, wobei das Joch Rippen aufweist, die jeden Dauermagneten von benachbarten Dauermagneten trennen.

11. Rotor nach Anspruch 8, wobei das Joch radiale schlitzförmige Öffnungen aufweist.

12. Rotor nach Anspruch 1, wobei die in Anspruch 1 beschriebenen Magnete eine erste Schicht umfassen und der Rotor ferner eine zweite Schicht neben der ersten Schicht umfasst, wobei die zweite Schicht axial magnetisierte Permanentmagnete umfasst.

13. Rotor nach Anspruch 12, wobei jeder der axial magnetisierten Permanentmagnete der zweiten Schicht eine magnetische Orientierung entgegengesetzt derjenigen der axial magnetisierten Permanentmagnete aufweist, die auf der zweiten Schicht benachbart sind.

14. Rotor nach Anspruch 12, wobei die Magnete jedes der Magnetpaare miteinander und mit einem der axial magnetisierten Magnetteile stoßverbunden sind.

15. Elektrische Maschine mit axialem Luftspalt mit dem Rotor nach Anspruch 1.

16. Maschine nach Anspruch 15, umfassend eine Rotoranordnung, die zwei jeweils wie in Anspruch 1 beschriebene voneinander beabstandete Rotoren umfasst, wobei zwischen ihnen ein Fluss erzeugt wird, der durch benachbarte Polabschnitte eines gegenläufigen axialen magnetischen Flusses schließt.

17. Maschine nach Anspruch 16, ferner umfassend mindestens einen scheibenförmigen Rotor, der axial magnetisierte Permanentmagnete umfasst, die ein heteropolares Magnetsystem mit einer Anzahl von Polen bilden, die gleich der Anzahl der Pole jedes der beabstandeten Rotoren nach Anspruch 1 ist.

## Revendications

1. Rotor plan d'une machine électrique à entrefer axial ayant un axe de rotation, ledit rotor comprenant une pluralité de pôles magnétiques alternatifs nord et sud, chacun desdits pôles magnétiques nord (1210) et sud (1110) étant généré par une paire de pièces d'aimant permanent (1211A, 1211B, 1111A, 1111B), dans lequel, pour chaque paire, les composantes axiales de l'aimantation des aimants composants sont co-directionnelles, tandis que leurs composantes tangentielles sont contre-directionnelles,
une pluralité desdites paires de pièces d'aimants permanents étant disposées l'une à côté de l'autre autour d'une culasse plane en forme de disque (2100), construisant ainsi un ensemble discoïdal, dans lequel les composantes axiales de l'aimantation desdits aimants appariés sont co-directionnelles, et les composantes tangentielles de l'aimantation desdits aimants appariés sont opposées.

2. Rotor selon la revendication 1, comprenant des premier et second ensembles de paires d'aimants, les paires d'aimants dudit premier ensemble ayant des composantes d'aimantation tangentielle dirigées l'une vers l'autre, les paires d'aimants dudit second ensemble ayant des composantes d'aimantation tangentielle dirigées l'une à l'opposé de l'autre,
et dans lequel des paires dudit premier ensemble alternent avec des paires dudit second ensemble autour dudit rotor.

3. Rotor selon la revendication 1, dans lequel lesdites paires d'aimants sont magnétisées avec une orientation comprise entre 30° et 60° par rapport à l'axe de rotation du rotor.

4. Rotor selon la revendication 1, dans lequel des éléments magnétiques supplémentaires ayant une composante d'aimantation tangentielle sont interposés entre lesdits pôles sud et nord.

5. Rotor selon la revendication 4, dans lequel lesdits éléments magnétiques supplémentaires sont orientés de telle sorte que leur composante d'aimantation tangentielle pointe à l'opposé d'une paire d'aimants générant un pôle sud et vers une paire d'aimants générant un pôle nord.

6. Rotor selon la revendication 1, dans lequel chacun desdits pôles magnétiques sud est constitué de deux pièces d'aimant permanent identiques assemblées bout à bout.

7. Rotor selon la revendication 1, dans lequel au moins certaines desdites paires d'aimants sont espacées des paires d'aimants adjacents.

8. Rotor selon la revendication 1, dans lequel ladite culasse plane en forme de disque est une culasse magnétique douce.

9. Rotor selon la revendication 8, dans lequel ladite culasse comprend des nervures qui séparent chaque paire d'aimants des paires d'aimants adjacents.

10. Rotor selon la revendication 8, dans lequel ladite culasse comprend des nervures qui séparent chaque aimant permanent des aimants permanents adjacents.

11. Rotor selon la revendication 8, dans lequel ladite culasse comporte des ouvertures radiales en forme de fente.

12. Rotor selon la revendication 1, dans lequel les aimants tels que décrits dans la revendication 1 comprennent une première couche, et le rotor comprenant en outre une seconde couche adjacente à ladite première couche, ladite seconde couche comprenant des aimants permanents magnétisés axialement.

13. Rotor selon la revendication 12, dans lequel chacun desdits aimants permanents magnétisés axialement de ladite seconde couche a une orientation magnétique opposée à celle des aimants permanents magnétisés axialement qui lui sont adjacents sur ladite seconde couche.

14. Rotor selon la revendication 12, dans lequel les aimants de chacune desdites paires d'aimants sont assemblés bout à bout l'un à l'autre et à l'une desdites pièces aimantées axialement.

15. Machine électrique à entrefer axial comprenant le rotor selon la revendication 1.

16. Machine selon la revendication 15, comprenant un ensemble rotor qui comprend deux rotors espacés chacun comme décrit par la revendication 1, créant entre eux un flux qui rend la fermeture à travers des sections polaires adjacentes de flux magnétique axial contre-directionnel.

17. Machine selon la revendication 16, comprenant en outre au moins un rotor discoïde comprenant des aimants permanents magnétisés axialement formant un système magnétique hétéropolaire ayant un nombre de pôles égal au nombre de pôles de chacun desdits rotors espacés comme décrit par la revendication 1.
